Europäisches Patentamt

European Patent Office

Office européen des brevets

(19)

(11) Numéro de publication: **0 202 181**
**A1**

(12) DEMANDE DE BREVET EUROPEEN

(21) Numéro de dépôt: 86430008.2

(22) Date de dépôt: 03.04.86

(51) Int. Cl.⁴: **A21C 11/12**

(30) Priorité: 09.04.85 FR 8503500

(43) Date de publication de la demande:
20.11.86 Bulletin 86/47

(84) Etats contractants désignés:
**AT BE CH DE GB IT LI LU NL SE**

(71) Demandeur: **Geyer, Freddy**
**Le Riou de l'Argentière**
**F-06210 Mandelieu(FR)**
Demandeur: **Julien, Christian**
**Les Hortensias Résidence Cimiez**
**Valombrose Avenue Ste Colette**
**F-01600 Nice(FR)**

(72) Inventeur: **Geyer, Freddy**
**Le Riou de l'Argentière**
**F-06210 Mandelieu(FR)**
Inventeur: **Julien, Christian**
**Les Hortensias Résidence Cimiez**
**Valombrose Avenue Ste Colette**
**F-01600 Nice(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

(54) Machine pour scarifier les pâtons fermentés avant leur entrée dans le four avec son module de chargement et de déchargement des plateaux.

(57) Machine pour scarifier les pâtons fermentés
L'élément support de lames est entraîné dans un mouvement circulaire par des poulies d'entraînement (4, 5) qui est transformé par des roulettes butées (12, 13) en un mouvement rectiligne horizontal réglable qui permet la scarification ; les supports de lames (7) sont flexibles car ils sont formés par une pièce souple en forme de S ou de C, dont une extrémité (9) est fixée à la platine support de lames (6) et dont l'autre extrémité (10) reçoit la lame tranchante (8) qui y est fixée par une pièce intermédiaire (11).
L'invention s'applique notamment à la boulangerie.

"Machine pour scarifier les pâtons fermentés avant leur entrée dans le four avec son module de chargement et de déchargement des plateaux"

L'invention a pour objet une machine pour scarifier les pâtons fermentés avant leur entrée dans le four. Elle a également pour objet un module de chargement et de déchargement automatique, des plateaux porte-pâtons.

Généralement, la scarification des pâtons est effectuée à la main à l'aide d'un couteau ou d'une lame de rasoir. Ces entailles superficielles sont formées sur les pâtons fermentés avant leur entrée dans le four, de manière à éviter que les morceaux de pâte à pain ou pâtons, éclatent en un endroit quelconque. Ces scarifications ont des caractéristiques techniques très précises. Ces entailles doivent former un angle aigu avec l'axe longitudinal du pâton. Les entailles doivent avoir une profondeur et une longueur très précises et ce, en fonction de la nature de la pâte et de la taille du pâton. Or, cette opération qui est effectuée normalement sur l'enfourneur, est longue et nécessite un tour de main pour que les scarifications soient régulières.

Plusieurs brevets décrivent des machines, destinées à produire des incisions ou des fentes dans la pâte fermentée de pains longs, avant de les introduire dans le four. Ces machines tracent des scarifications simultanées sur une rangée de pâtons. Or, tous les pâtons n'ont pas la même forme, la même taille et le même diamètre. Il s'ensuit que les lames qui ont toutes les mêmes caractéristiques techniques forment des scarifications irrégulières qui peuvent être dommageables au moment de la cuisson dans le four.

L'état de la technique peut être défini par les brevets suivants :

-FRA.2 410 438,

-FRA.2 269 865,

-FRA.2 422 335,

-FRA.2 223 946,

-FRA.2 340 050,

Les appareils décrits dans ces brevets n'ont pas de lames sensibles qui absorbent les légères différences de diamètre qui existent toujours entre les différents pâtons. Les stries ou scarifications sont obtenues par des mouvements compliqués peu fiables et coûteux à la fabrication et à la maintenance. Les moyens de nettoyage des lames sont peu efficaces.

L'invention tend à résoudre ces inconvénients. Elle permet d'utiliser une lame scarificatrice qui est sensible et qui s'adapte au pâton de manière à former des scarifications dont les caractéristiques sont toujours bien définies et ce, quelles que soient les irrégularités des pâtons. Elle permet d'intégrer ladite machine dans une chaîne de panification.

L'invention permet d'obtenir des scarifications régulières quelles que soient les irrégularités des pâtons fermentés avant leur entrée dans le four. Ainsi, elle permet :

-de régler automatiquement la sensibilité de coupe sur chaque lame,

-de régler la longueur de coupe,

-d'humidifier les lames avant chaque serie de scarifications.

-d'avoir une machine fiable du fait de son mécanisme simple et efficace ;

A cet effet l'appareil selon l'invention comporte :

-un élément support de lames,

-un élément support de plateaux.

L'élément support de lames comporte :

-un moteur et des poulies d'entraînement,

-une platine amovible porte-lames montée sur un cadre,

-lesdits supports de lames sont flexibles de manière à absorber les irrégularités de hauteur de pâtons,

-des lames tranchantes interchangeables sont montées inclinées suivant le support flexible,

-les supports de lames tranchantes sont flexibles car ils sont formés par une pièce souple en forme de S ou en forme de c, dont une extrêmité est fixée au plateau support de lames et dont l'autre extrêmité reçoit la lame tranchante qui y est fixée par une pièce intermédiaire,

lesdits supports de lames peuvent également faire office de lames tranchantes. Il suffit que leur extrémité soit adaptée en conséquence pour être tranchante.

en position de début de scarifications, le support de lames 1 vient en butée contre les roulettes butées 12, 13, le galet 30 commence à décoller dans la glissière 16.

Dans la figure 6, le support de lames est en position médiane de scarifications, le galet 30 est décollé dans la glissière 16.

Dans la figure 7, le support de lames est en position de fin de scarifications, le support de lames 1 va quitter le contact avec les roulettes butées 12, 13, le galet 30 est à nouveau en appui dans la glissière 16.

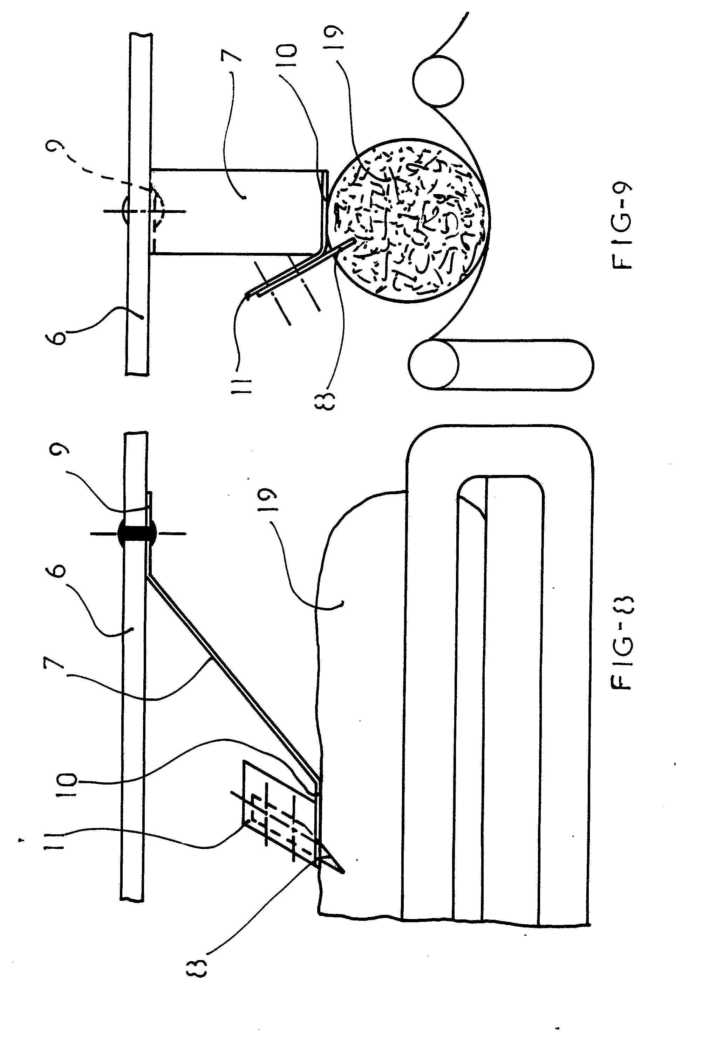

Les figures 8 et 9 représentent une vue en détail d'un support de lame flexible, vu de profil (figure 8) et de face (figure 9).

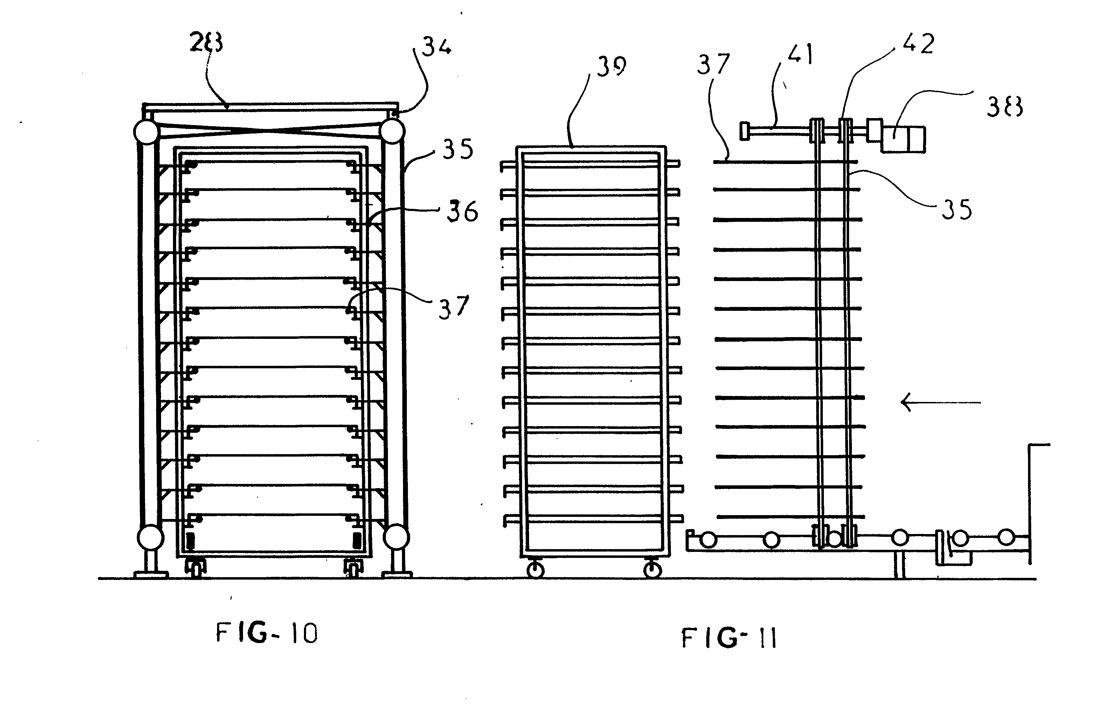

La figure 10 est une vue de face du portique de chargement et de déchargement d'un chariot de manutention et de stokage de plateaux contenant les pâtons.

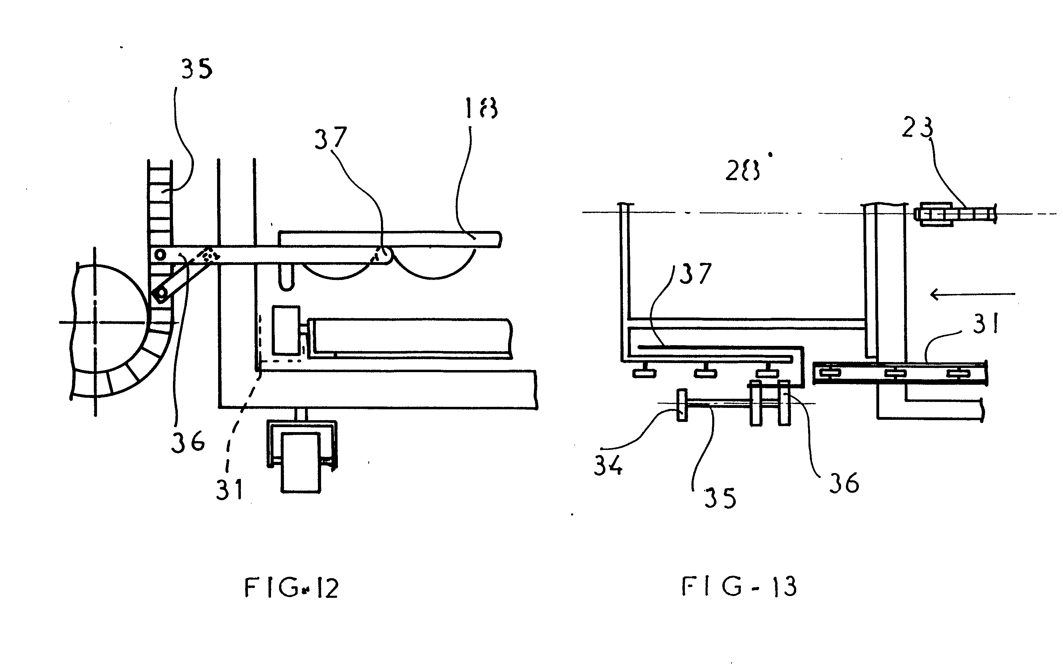

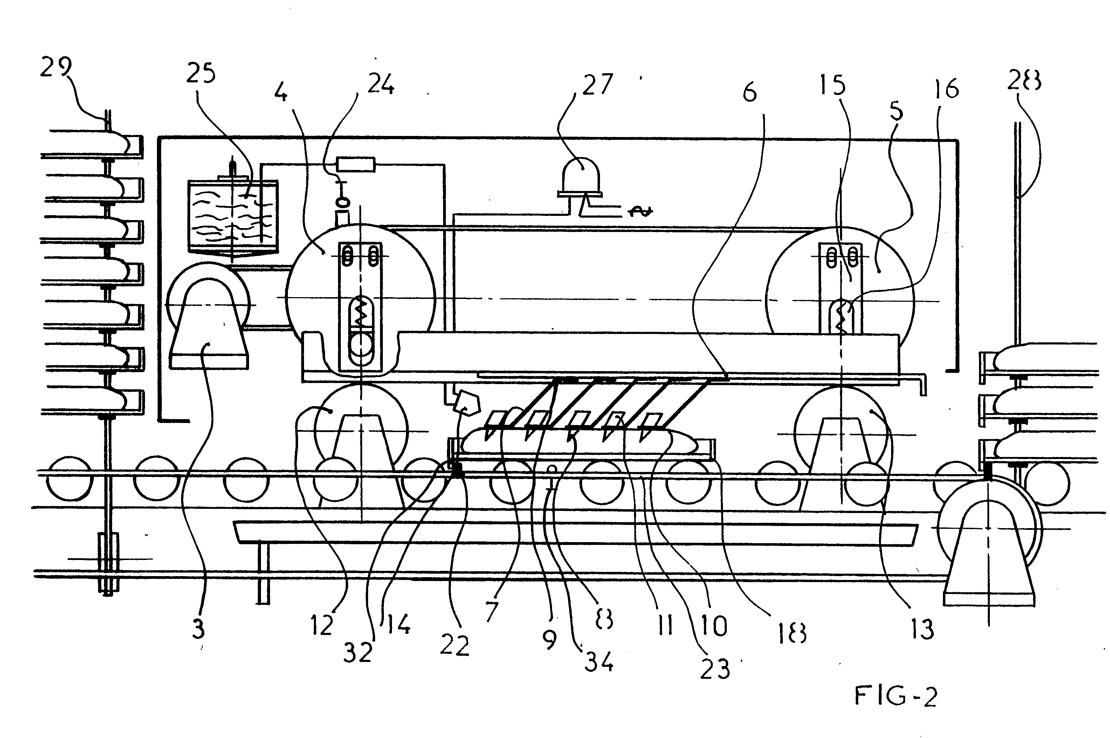

La figure 11 est une vue de côté du portique et du chariot dégagé dudit portique.

La figure 12 est une vue de côté d'un détail de la chaîne et d'un des bras du portique soutenant un plateau porte pâtons.

La figure 13 est une vue en plan de la machine représentée à la figure 12.

L'appareil selon l'invention comporte :

-un élément support de lames 1,

-un élément support de plateaux 2.

L'élément support de lames comporte :

-un moteur 3 et des poulies d'entraînement 4, 5,

-une platine amovible porte-lames 6 montée sur un cadre 40,

-lesdits supports de lames 7 sont flexibles de manière à absorber les irrégularités de hauteur de pâtons,

-des lames tranchantes 8 interchangeables sont montées inclinées suivant le support flexible 7,

-les supports 7 de lames tranchantes 8 sont flexibles car ils sont formés par une pièce 7 souple en forme de S, dont une extrêmité 9 est fixée au plateau support de lames 6 et dont l'autre extrêmité 10 reçoit la lame tranchante 8 qui y est fixée par une pièce intermédiaire 11,

lesdits supports de lames peuvent également faire office de lames tranchantes. Il suffit que leur extrémité soit adaptée en conséquence pour être tranchante.

-des moyens faisant office de roulettes butées 12, 13 permettent un mouvement parallèle des lames 8 par rapport à l'élément support de plateaux 2,

-un moyen d'humidification 14 des lames est assuré par des jets d'eau et/ou d'air sous pression.

Le cadre de la platine permet à celle-ci d'être amovible. L'utilisateur peut ainsi à volonté changer de platine en fonction du nombre de pâtons à scarifier et/ou du diamètre desdits pâtons.

Le cadre 40 support de la platine porte-lames 6 est solidaire de galets 30.

Des galets 30 sont logés dans des patins décentrés 15 fixés sur des poulies d'entrainement 4, 5.

Lesdits galets sont logés dans les patins décentrés 15 dans des glissières réglables 16 qui comportent des ressorts 17. La position desdites glissières 16 est réglable par des trous oblongs.

La rotation des poulies d'entraînement 4, 5 entraîne donc le cadre 40 et la platine porte-lames 6 dans un mouvement circulaire jusqu'à ce que le cadre 40 de la platine vienne en contact avec des roulettes butées 12, 13, la platine suit alors un mouvement rectiligne horizontal. Le réglage des glissières 16 permet donc de régler la longueur de coupe ou longueur des scarifications.

Les roulettes butées 12, 13 sont disposées dans un plan horizontal parallèle au plan support de pâtons 19. La distance séparant lesdites roulettes butées et le cadre 40 de la platine porte-lames est réglée en fonction de la longueur des supports flexibles 7 de lames 8 et de la longueur des scarifications désirées. Le cadre 40 de la platine porte-lames 6 doit être en contact avec lesdites roulettes butées 12, 13, pour assurer le mouvement rectiligne de la platine qui permet la scarification.

En fin de scarification, les galets 30 logés dans les glissières 16, contre des ressorts 17, glissières montées sur les pâtins décentrés 15, soulèvent le cadre 40 et la platine porte-lames 6 qui dégagent ainsi les lames tranchantes de la pâte.

L'élément support de plateaux 2 est composé de rails 31 guide-plateaux qui, par un chemin de roulement, assure le passage des plateaux 18 contenant les pâtons 19 sous la platine porte-lames 6. L'axe longitudinal 21 du cadre 40 et de la platine porte-lames 6 forme un angle d'inclinaison 20 avec les rails guide-plateaux 31 et ce, suivant l'angle d'inclinaison des stries à faire sur les pâtons 19. Les plateaux porte-pâtons 18 sont guidés par les rails 31 et transportés sur le chemin de roulement par des doigts d'entraînement 22 disposés judicieusement sur des brins d'entraînement 23 - (courroies crantées et chaînes entraînées par un moteur 33...) et qui viennent accrocher lesdits plateaux porte-pâtons 18 à des ergots d'accrochage 32 fixés au plateau 18 contenant les pâtons 19. Des contacts 24 commandent l'action de la platine porte-lames 6 qui agit en synchronisation au passage du plateau porte-pâtons.

Le moyen d'humidification 14 des lames est assuré par des jets d'eau et/ou d'air envoyés par une buse de pulvérisation 14 alimenté par un réservoir d'eau 25 et un compresseur 27. Le microcontact 24, monté sur une des parties d'entraînement, actionne le moyen d'humidification et la fin de course.

Le principe de fonctionnement de l'appareil est le suivant :

En position initiale le moteur 3 est à l'arrêt, la platine porte-lames 6 est en position haute actionnant un microcontact 24. Ce microcontact 24 actionne la fin de course et le moyen d'humidification.

Le plateau porte-pâtons 18 est, soit posé manuellement sur les rails de guidage 31 puis entraîné sur le chemin de roulement, soit posé automatiquement sur le chemin de roulement où il est entraîné automatiquement.

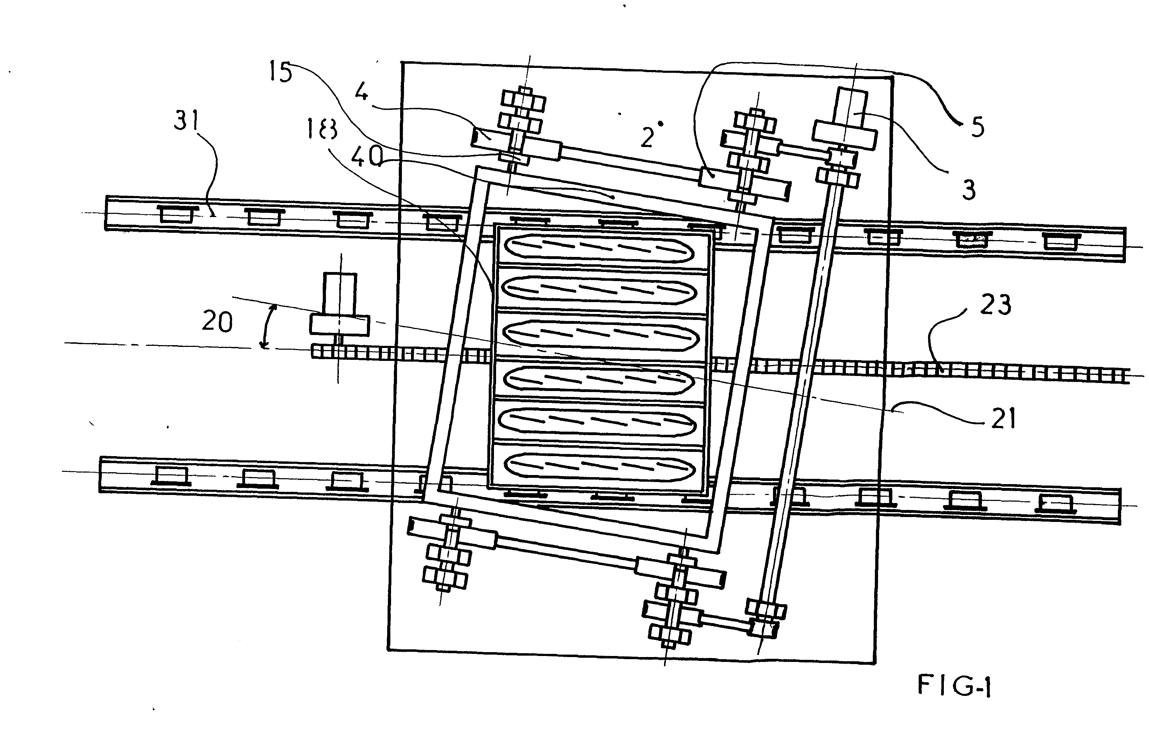

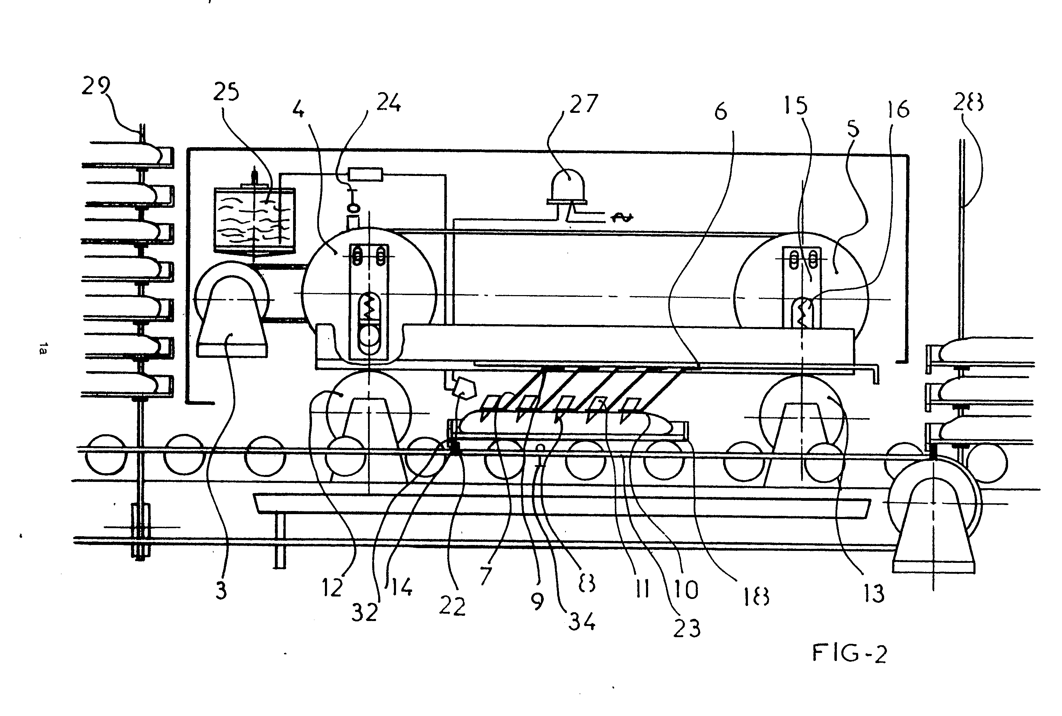

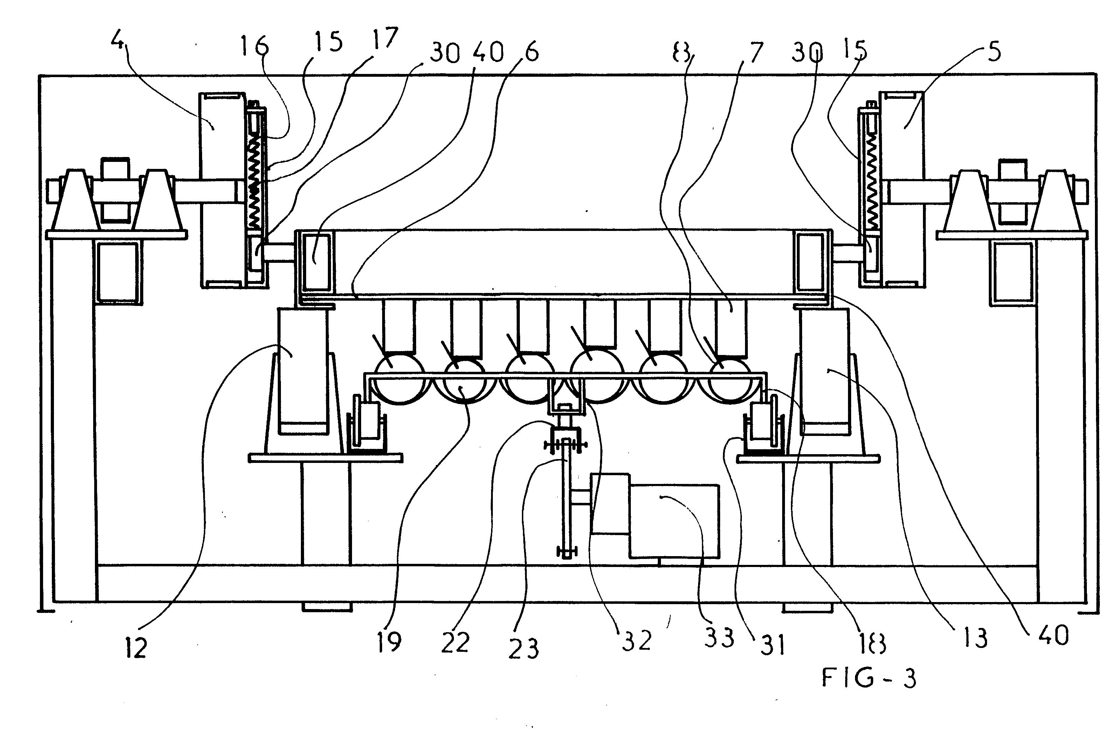

Comme on le voit la figure 2, les plateaux 18 peuvent provenir d'un portique de chargement et de déchargement. Le chariot 28 porte les plateaux 18 avant scarification, le portique 29 porte les plateaux porte-pâtons 18 après scarification.

La platine porte-lames 6 vient en contact avec un autre microcontact 43. Ce microcontact est un contact de début de course. Le moteur 3 est mis sous tension, la platine porte-lames 6 est entraîné dans un mouvement circulaire par les poulies 4, 5. Le cadre 40 de la platine porte-lames 6 vient en contact avec les roulettes butées 12, 13 et la platine porte-lames suit alors un mouvement horizontal. Ce mouvement est possible grâce aux galets 30 qui coulissent dans les glissières fixées aux patins décentrés 15.

Le moteur 3 s'arrête, le plateau porte-pâtons disparaît entraîné par le chemin de roulement pour être soulevé et rangé dans un portique de chargement et de déchargement 29.

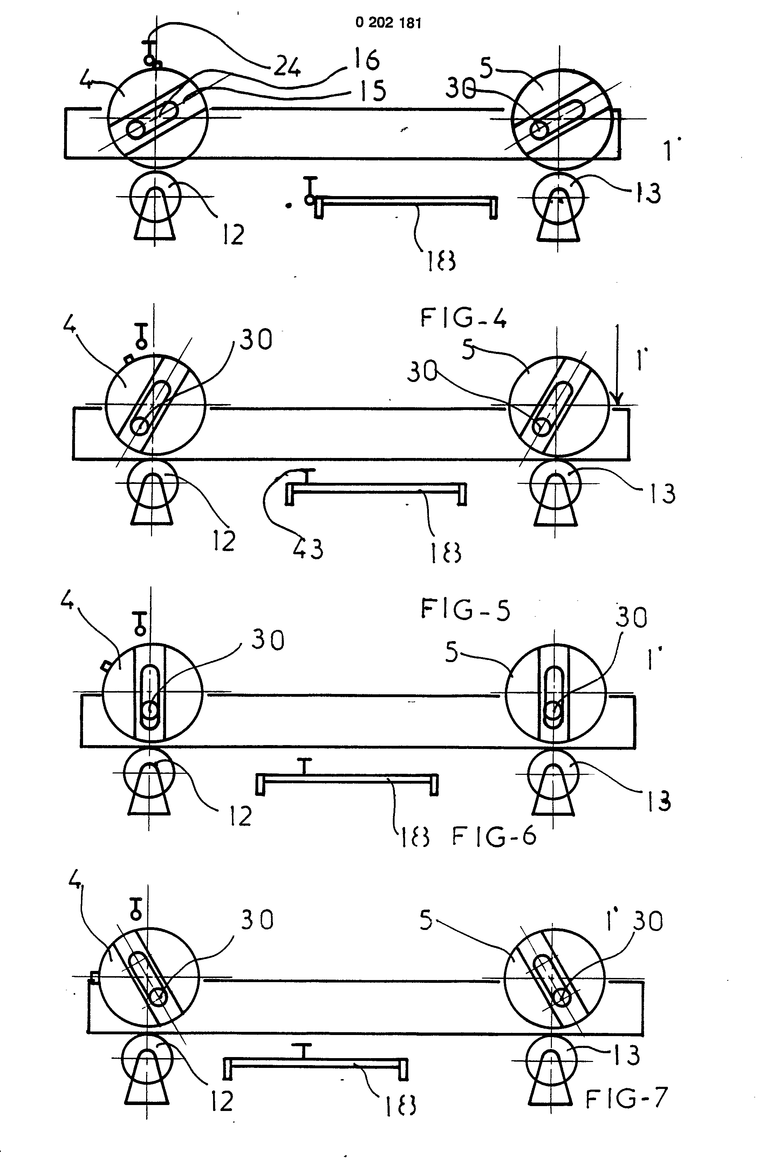

Les figures 4, 5, 6 et 7 permettent de bien comprendre la cinématique des différents éléments.

Dans le cas d'une chaîne de panification, l'appareil peut, bien entendu fonctionner, même si les pâtons ne sont pas disposés sur des plateaux porte pâtons, mais directement sur un chemin de roulement. Dans ce cas, la platine amovible porte-lames est changée pour s'adapter à toute chaîne de panification.

L'appareil selon l'invention a également pour objet un module de chargement et de déchargement 28, 29 des plateaux porte-pâtons 18.

Ledit module 28 ou 29 est composé d'un portique 28 ou 29 dont les montants verticaux 34 comportent des chaînes 35 sur lesquelles sont fixés par des équerres 36 des bras horizontaux 37. Lesdits bras horizontaux 37 sont perpendiculaires aux équerres et parallèles à l'axe longitudinal dudit portique. Ces bras horizontaux 37 sont répartis à intervalles réguliers sur chaque chaîne 35. Chaque niveau comporte sur les deux chaînes 35 deux bras horizontaux 37, dont l'écartement entre-eux, est inférieur à la largeur du plateau porte-pâtons 18. Les bras horizontaux 37 sont, pour plus de stabilité, fixés par deux points de fixation aux équerres 36 qui peuvent également être doublées.

Un moteur 38 fait tourner l'arbre 41, les poulies 42 et les chaînes 35 pour que les bras horizontaux 37 puissent monter et descendre.

Le portique 28 est mis en place à l'entrée et/ou à la sortie de l'appareil.

Lorsque tous les plateaux porte-pâtons sont déposés ou retirés, une alarme prévient le manutentionnaire qu'il faut recharger le portique.

Un chariot de manutention 39 vide ou portant une série de plateaux entre sous le portique 28 ou 29, les bras horizontaux viennent soulever la série de plateaux. Le chariot de manutention 39 est retiré. Le portique peut alors automatiquement poser ou retirer les plateaux porte-pâtons 18 sur le chemin de roulement.

**Revendications**

1. Machine pour scarifier les pâtons fermentés avant leur entrée dans le four composée d'un élément support de lames (1) et d'un chemin de roulement qui porte les pâtons (19) sous ledit élément (1) caractérisée par le fait que l'élément support de lames (1) est entraîné dans un mouvement circulaire par des poulies d'entraînement (4, 5) qui est transformé par des roulettes butées (12, 13) en un mouvement rectiligne horizontal réglable qui permet la scarification.

2. Machine selon la revendication 1 caractérisée par le fait que l'élément support de lames (1) est composé d'une platine amovible porte-lames (6) montée sur un cadre solidaire de galets (30), lesdits galets (30) sont logés dans des glissières réglables (16) dans des patins décentrés (15) fixés sur des poulies d'entraînement (4, 5) animées par un moteur (3).

3. Machine selon l'une quelconque des revendications 1 ou 2 caractérisée par le fait que les glissières (16) sont réglables dans leur fixation sur les patins décentrés (15) par des trous oblongs.

4. Machine selon l'une quelconque des revendications 1, 2 ou 3 caractérisée par le fait que les glissières (16) comportent des ressorts (17) en contact avec les galets (30).

5. Machine selon l'une quelconque des revendications 1, 2, 3 ou 4 caractérisée par le fait que les supports de lames (7) sont flexibles de manière à absorber les irrégularités des pâtons (19) tout en formant par leur lame (8) des scarifications régulières.

6. Machine selon la revendication 5 caractérisée par le fait que les supports de lames (7) sont flexibles car ils sont formés par une pièce souple en forme de S, dont une extrémité (9) est fixée à la platine support de lames (6) et dont l'autre extrémité (10) reçoit la lame tranchante (8) qui y est fixée par une pièce intermédiaire (11).

7. Machine selon la revendication 6 caractérisée par le fait que les supports de lames (7) sont formés par une pièce souple qui peut être en forme de C.

8. Machine selon la revendication 1 caractérisée par le fait que les roulettes butées (12, 13) sont disposées dans un plan horizontal parallèle au plan support de pâtons (19) ; la distance séparant lesdites roulettes butées et le cadre 40 de la platine porte-lames est réglée en fonction de la longueur des supports flexibles (7) de lames (8) et en fonction de la longueur des scarifications ; le cadre de ladite platine porte-lames (6) doit être en contact avec lesdites roulettes butées (12, 13), pour assurer son mouvement rectiligne qui permet la scarification.

9. Machine selon la revendication 1 caractérisée par le fait que l'élément support de plateaux (2) est composé de rails (31) guide-plateaux qui, par un chemin de roulement , assure le passage des plateaux (18) contenant les pâtons (19) sous la platine porte-lames (6) ; l'axe longitudinal (21) du cadre 40 et de la platine porte-lames (6) forme un angle d'inclinaison (20) avec les rails guide-plateaux (31) et ce, suivant l'angle d'inclinaison des stries à faire sur les pâtons (19) ; les plateaux porte-pâtons (18) sont guidés par les rails (31) et transportés sur le chemin de roulement par des doigts d'entraînement (22) disposés judicieusement sur des brins d'entraînement (23) (courroies crantées et chaînes entraînées par un moteur (33)-...) et qui viennent accrocher lesdits plateaux porte-pâtons (18) à des ergots d'accrochage (32) fixés au plateau (18) contenant les pâtons (19) ; des contacts (43 et 24) commandent l'action de la platine porte-lames (6) qui agit en synchronisation au passage des pâtons.

10. Machine selon la revendication 1 caractérisée par le fait que le moyen d'humidification (14) des lames est assuré par des jets d'eau et/ou d'air envoyés par une buse de pulvérisation (14) alimenté par un réservoir d'eau (25) et un compresseur (27) ; l'ensemble est déclenché par un microcontact 24.

11. Machine selon la revendication 1 caractérisée par le fait qu'elle peut comporter un portique (28) de déchargement des plateaux support de pâtons (18) et/ou un portique de chargement des plateaux support de pâtons (18) scarifiés.

12. Machine selon l'une quelconque des revendications 1 ou 2 caractérisée par le fait que le portique (28 ou 29) comporte au niveau de ses montants verticaux des chaînes (35) animées par un moteur (38), lesdites chaînes portent des bras horizontaux (37) maintenus en place par des équerres (36) de fixation, chaque niveau dispose de deux bras horizontaux (37) dont l'écartement entre-eux est inférieur à la largeur d'un plateau porte-pâtons (18).

13. Machine selon l'une quelconque des revendications 1, 11 ou 12 caractérisée par le fait que la dimension du portique (28, 29) permet l'entrée d'un chariot de manutention, que le montée où la descente des bras horizontaux (37) permet de prendre ou de poser les plateaux porte-pâtons (18).

14. Machine selon l'une quelconque des revendications 1, 2, 3, 4 ou 5 caractérisée par le fait que le support de lames (7) flexible peut comporter une extrémité qui est tranchante et qui fait office de lame.

FIG-1

FIG-2

0 202 181

FIG - 3

0 202 181

0 202 181

FIG-4

FIG-5

FIG-6

FIG-7

FIG-8

FIG-9

0 202 181

FIG-10

FIG-11

0 202 181

FIG-12

FIG-13

0 202 181

FIG-2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 223 946  (A. MULET) | | A 21 C  11/12 |
| A | GB-A-1 084 637  (VEREINIGTE BÄCKEREIMASCHINENWERKE) | | |
| A | FR-A-1 114 890  (J. LUC) | | |
| D,A | FR-A-2 340 050  (J.M. ECHEGOYEN TOLOSA) | | |
| D,A | FR-A-2 410 438  (J. MICHEL) | | |
| D,A | FR-A-2 422 335  (GASHOR-OOMS S.A.) | | |

DOMAINES TECHNIQUES
RECHERCHES (Int. Cl.4)

A 21 C

Le présent rapport de recherche a été établi pour toutes les revendications

| Lieu de la recherche | Date d'achèvement de la recherche | Examinateur |
|---|---|---|
| LA HAYE | 02-07-1986 | FRANKS N.M. |